# EUROPEAN PATENT APPLICATION

(11) **EP 1 768 128 A2**
(43) Date of publication of application: **28.03.2007**
(21) Application number: 06120993.8
(22) Date of filing: 20.09.2006
(51) Int. Cl.: G11B 27/34

(54) **Method and apparatus for highlighting buttons on screen on which a plurality of applications are displayed, and information recording medium thereof**

(30) Priority: 22.09.2005 KR 20050088212
(71) Applicant: SAMSUNG ELECTRONICS CO., LTD., Suwon-si, Gyeonggi-do 442-742 (KR)
(72) Inventor: Kang, Man-seok, Yeongtong-gu Gyeonggi-do Suwon-si (KR); Jung, Kil-soo 104-1401 Namsuwon Doosan Apt., Hwaseong-si (KR); Park, Sung-wook, Seoul (KR)
(74) Representative: Waddington, Richard

(57) **Abstract**

Provided are an information storage medium on which contents for interactively providing a user with audio/visual data are recorded, a method and an apparatus for highlighting buttons on a screen (500) on which a plurality of applications are displayed so as to interactively provide the user with the audio/visual data. The contents include information about a button performing a predetermined function. The information about the button includes neighboring button information (540) for moving within an application to which the highlighted button belongs or for moving to a neighboring application which is adjacent to the application to which the highlighted button belongs.

## Description

Aspects of the present invention relate to an information storage medium which stores contents for interactively providing a user with audio/visual data, and a method and apparatus for highlighting buttons on a screen on which a plurality of applications are displayed to interactively provide a user with audio/visual data.

Conventional moving-picture data includes audio/visual (AV) data for reproducing a high-definition movie, and navigation data for controlling reproduction of the AV data. In addition to the AV and navigation data, there is a demand for applications that improve interactivity with a user. Such interactive applications can be reproduced together with moving-picture data. Such interactive contents can be reproduced with a moving picture or according to the reproduction unit of the moving-picture data, for example, according to a title.

In general, multiple buttons are included within one application for interactivity with a user. In order for a user to smoothly move among the plurality of buttons, information about the neighboring button is included in each button so that, when the user inputs a directional key of a user input device, the user can move to the defined neighboring button. However, as there are multiple applications reproduced with a moving picture, there is a need for smooth movement among buttons defined in different applications.

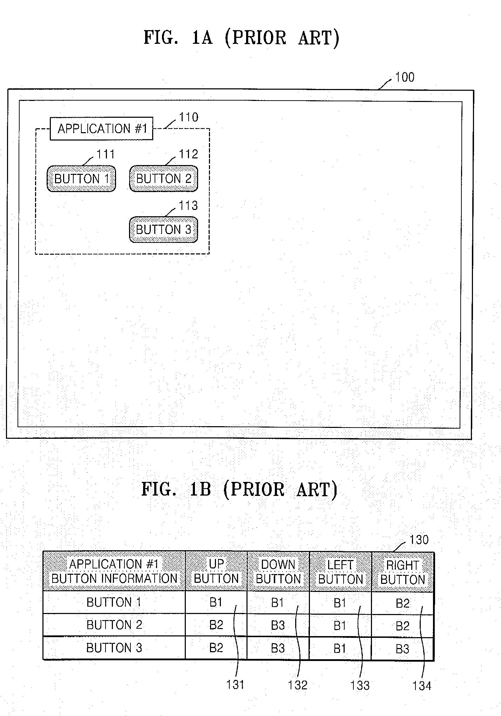

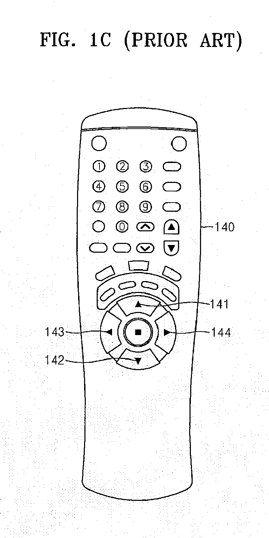

FIG. 1A is a drawing of a screen 100 when only one application is displayed according to a conventional technique. Specifically, FIG. 1 illustrates an example in which 'APPLICATION #1' 110 operates with AV data on the screen 100 of an apparatus for reproducing an information storage medium. Three buttons, 'BUTTON 1' 111, 'BUTTON 2' 112, and 'BUTTON 3' 113 are defined in 'APPLICATION #1' 110. FIG. 1C illustrates an example of a remote control 140 used to select a button of 'APPLICATION #1' 110.

A user freely moves among buttons defined in 'APPLICATION #1' 110 in the screen illustrated in FIG. 1A using directional buttons of the remote control 140 and selects the buttons. Referring to FIG. 1C, for example, the directional buttons of the remote control 140 include an up key 141, which allows the user to move to a button above a presently-selected button, a down key 142, which allows the user to move to a button below a presently-selected button, a left key 143, which allows the user to move to a button to the left of a presently-selected button, and a right key 144, which allows the user to move to a button to the right of a presently-selected button.
FIG. 1B is a table illustrating button information 130 of 'APPLICATION #1' 110. In general, the button information 130 includes information about a function performed when a target button is selected. The button information 130 also includes information about a neighboring button to move to when the user presses a directional button while the target button is selected. FIG. 1B thus illustrates the information about the neighboring button. The user moves among the buttons based on the information about the neighboring button illustrated in FIG. 1B.

Referring to FIG. 1B, neighboring button information of 'BUTTON 1' 111 of 'APPLICATION #1' 110 is defined in a first row of the table. Neighboring button information of 'BUTTON 2' 112 of 'APPLICATION #1' 110 is defined in a second row of the table. Neighboring button information of 'BUTTON 3' 113 of 'APPLICATION #1' 110 is defined in a third row of the table. The neighboring button information of 'BUTTON 1' 111 is information about the neighboring buttons to which highlighting is moved when the user presses the up key 141, the down key 142, the left key 143, and the right key 144, respectively, in the state where 'BUTTON 1' 111 is selected.

Button movement will be briefly described with reference to FIGS. 1A and 1B. "B1" of a cell 131 in the table of neighboring button information indicates that 'BUTTON 1' 111 remains highlighted when the user presses the up key 141 of the remote control 140 in the state where 'BUTTON 1' 111 of 'APPLICATION #1' 110 displayed on the screen 100 is selected. In addition, since there are no buttons to the left of and below 'BUTTON 1' 111, "B1" is indicated in cells 132 and 133 of the table of the neighboring button information. "B2" of a cell 134 of the table of the neighboring button information indicates that 'BUTTON 2' 112 becomes highlighted when the user presses the right key 144 of the remote control 140 in the state where 'BUTTON 1' 111 of 'APPLICATION #1' 110 displayed on the screen 100 is selected.

Referring to FIG. 1A, when only one application is executed with the AV data, the user freely moves among buttons according to the defined neighboring button information.

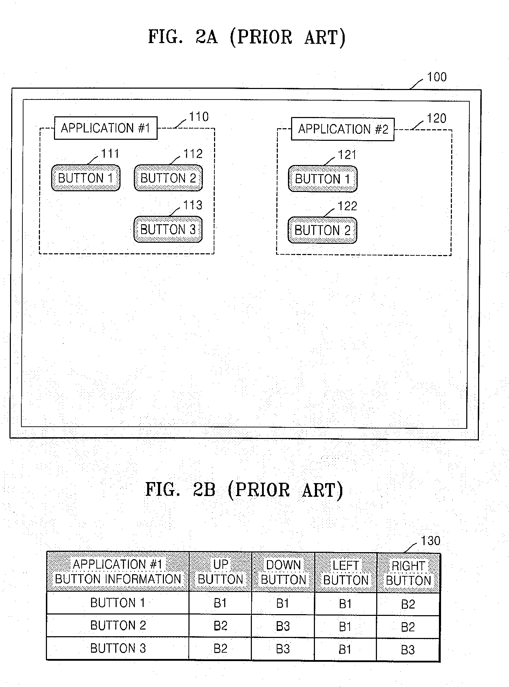

FIG. 2A is a drawing of the screen 100 when two applications are displayed on the screen 100 according to the conventional technique. FIG. 2A illustrates an example in which 'APPLICATION #1' 110 and 'APPLICATION #2' 120 operate with the AV data on the screen 100 of the apparatus for reproducing an information storage medium. Three buttons, 'BUTTON 1' 111, 'BUTTON 2' 112, and 'BUTTON 3' 113 are defined in 'APPLICATION #1' 110, and two buttons, 'BUTTON 1' 121 and 'BUTTON 2' 122 are defined in 'APPLICATION #2' 120.

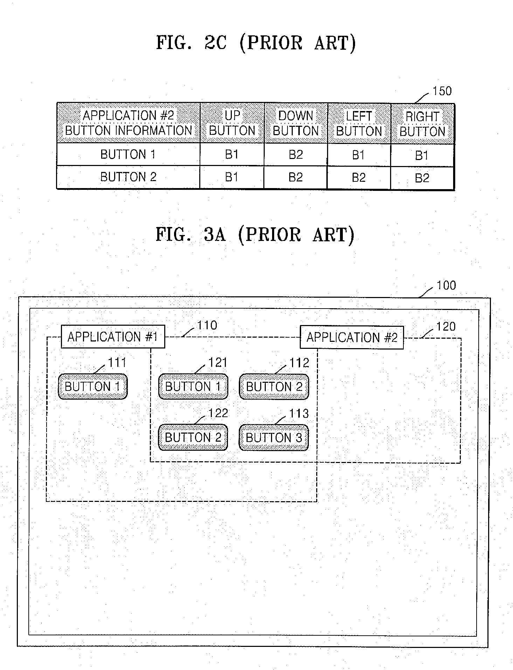

FIG. 2B is a table of the button information 130 of 'APPLICATION #1' 110 in the state illustrated in FIG. 2A. The button information 130 of 'APPLICATION #1' 110 illustrated in FIG. 2B is the same as the button information 130 of 'APPLICATION #1' 110 illustrated in FIG. 1B. FIG. 2C is a table of button information 150 of 'APPLICATION #2' 120 in the state illustrated in FIG. 2A.

The button information 150 of 'APPLICATION #2' 120 illustrated in FIG. 2C represents information about movement among buttons in 'APPLICATION #2 120'. That is, a first row of the table of the button information 150 represents information about a neighboring button which becomes highlighted when the user presses an up key 141, a down key 142, a left key 143, and a right key 144, respectively, using a remote control in the state where 'BUTTON 1' 121 of 'APPLICATION #2' 120 is selected. A second row of the button information 150 represents information about a neighboring button which becomes highlighted when the user presses the up key 141, the down key 142, the left key 143, and the right key 144, respectively, using the remote control in the state where 'BUTTON 2' 122 of 'APPLICATION #2' 120 is selected.

Referring to FIG. 2A, even when two applications are simultaneously displayed on one screen 100, the button information 130 of 'APPLICATION #1' 110 represents only neighboring button information in 'APPLICATION #1' 110, and the button information 150 of 'APPLICATION #2' 120 represents only the neighboring button information generated by movement among the buttons defined in 'APPLICATION #2' 120. Thus, even when the user presses the right button of the remote control to move to 'BUTTON 1' 121 of 'APPLICATION #2' 120 in an intuitive manner where 'BUTTON 2' 112 of 'APPLICATION #1' 110 is selected in the screen 100 illustrated in FIG. 2A, 'BUTTON 1' 121 of 'APPLICATION #2' 120 is not highlighted. Instead, 'BUTTON 2' 112 of 'APPLICATION #1' 110 remains highlighted according to the neighboring button information 140 of 'APPLICATION #1' 110.

FIG. 3A is a drawing of the screen 100 in the state that two applications are overlapped and displayed according to the conventional technique. FIG. 3A illustrates an example in which 'APPLICATION #1' 110 and 'APPLICATION #2' 120 are overlapped and displayed with the AV data on the screen 100 of the apparatus for reproducing an information storage medium. Three buttons, 'BUTTON 1' 111, 'BUTTON 2' 112, and 'BUTTON 3' 113 are defined in 'APPLICATION #1' 110, and two buttons, 'BUTTON 1' 121 and 'BUTTON 2' 122 are defined in 'APPLICATION #2' 120.

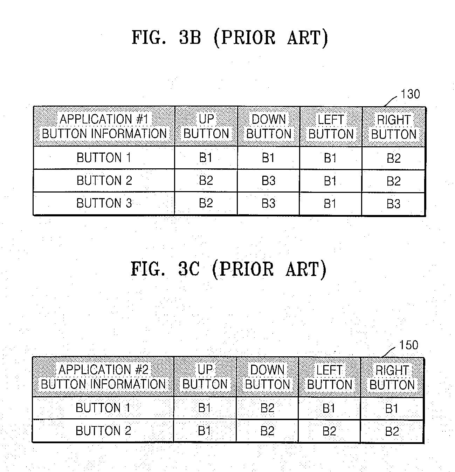

FIG. 3B illustrates button information of 'APPLICATION #1' 110 in the state illustrated in FIG. 3A. Referring to FIG. 3A, 'APPLICATION #1' 110 and 'APPLICATION #2' 120 are overlapped and displayed in the screen. Even when buttons defined in 'APPLICATION #1' 110 and 'APPLICATION #2' 120 overlap, neighboring button information 130 of 'APPLICATION #1' 110 includes only information about movement among the buttons defined in 'APPLICATION #1' 110.

FIG. 3C illustrates button information 150 of 'APPLICATION #2' 120 in the state illustrated in FIG. 3A. Like the neighboring button information 130 of 'APPLICATION #1' 110, even when buttons defined in 'APPLICATION #1' 110 and 'APPLICATION #2' 120 overlap, the neighboring button information 150 of 'APPLICATION #2' 120 includes only the neighboring button information generated by movement among the buttons defined in 'APPLICATION #2' 120. Thus, even when the user presses the right button of the remote control to move to 'BUTTON 1' 121 of 'APPLICATION #2' 120 where 'BUTTON 2' 112 of 'APPLICATION #1' 110 is selected in the screen 100 illustrated in FIG. 3A, since the neighboring button information 130 of 'APPLICATION #1' 110 defines movement information among only the buttons included in 'APPLICATION #1' 110, 'BUTTON 1' 121 of 'APPLICATION #2' 120 is not highlighted. Instead, and counter-intuitively, 'BUTTON 2' 112 of 'APPLICATION #1' 110 remains highlighted.

In the conventional technique, when multiple applications are simultaneously executed on one screen, there is no definition for moving from a highlighted button in a specific application to a specific button within the other application. Therefore, there is a problem that button movement can be performed only in an application including a highlighted button and not in the other application.

To address this problem, a first method provides that, when there is no neighboring button defined for a specific button when a user inputs a directional key while a button in one application is highlighted or when the neighboring button is itself, the button of another application that is closest to the currently highlighted button is highlighted. Alternatively, a second method provides a specific mechanism converting the focus among applications and a user presses a button to move the highlighting to another application, when a default button of the another application is highlighted, movement among buttons is made according to neighboring information of a target button.

However, in the case of the first method, when there are multiple buttons of the other application which are adjacent to a currently-selected button belonging to one application, there is a problem in determining which of the buttons is to be highlighted. Moreover, the first method has the disadvantage of adding a calculation burden to a reproducing apparatus since a distance between multiple buttons which are adjacent to the currently selected button should be calculated.

In the case of the second method, there is a problem where user using the information storage medium does not know applications well. In addition, as shown in FIG. 3A, when a plurality of applications are overlapped and displayed on a screen, switching between applications confuses the user.

Besides the above-described problems, due to various applied methods of applications, it cannot be determined whether or not a specific application has been executed during a given reproduction time. In addition, since a button can be selectively displayed in an application, smooth button movement cannot be supported by a conventional simple method using neighboring button information and an apparatus for processing neighboring button information.

The present invention provides a method and apparatus for highlighting buttons on a screen in which highlight movement among buttons defined in a plurality of applications can be made without confusing a user when the applications are executed on one screen, and an information storage medium thereof.

According to the present invention there is provided an apparatus and method as set forth in the appended claims. Preferred features of the invention will be apparent from the dependent claims, and the description which follows.

According to an aspect of the present invention, there is provided an information storage medium on which contents for interactively providing a user with audio/visual data are recorded, wherein the contents include information about a button performing a predetermined function, and the information about the button includes neighboring button information for highlight movement within an application to which a highlighted button belongs or highlight movement to a neighboring application which is adjacent to the application to which the highlighted button belongs.

Preferably, the neighboring button information includes application identifier information and button identifier information of the highlighted button according to the input of directional keys in a state where the highlighted button is selected.

Preferably, the neighboring button information is composed based on applications that can be executed with the audio/visual data and button information of the applications.

Preferably, the neighboring button information is composed based on applications that are being executed at a given time and button information of the applications.

Preferably, the neighboring button information is included in applications or recorded independently of applications.

According to another aspect of the present invention, there is provided a method of highlighting buttons on a screen on which a plurality of applications are displayed so as to interactively provide a user with audio/visual data, the method comprising: generating neighboring button information for highlight movement within an application to which a highlighted button belongs or highlight movement to a neighboring application which is adjacent to the application to which the highlighted button belongs; and if a directional key input for highlight movement is received, highlighting a button corresponding to the received directional key input based on the neighboring button information.

Preferably, the generating of the neighboring button information comprises generating the neighboring button information based on applications that can be executed with the audio/visual data and button information of the applications.

Preferably, the generating of the neighboring button information comprises generating the neighboring button information based on applications that are currently being executed on the screen and button information of the applications.

Preferably, the generating of the neighboring button information comprises dynamically changing the neighboring button information according to a display state of the applications that are being executed on the screen.

Preferably, the highlighting of the button corresponding to the received directional key based on the neighboring button information comprises, when the button corresponding to the received directional key is deactivated on the screen, highlighting the button corresponding to the received directional key based on neighboring button information of the button corresponding to the received directional key.

Preferably, the highlighting of the button corresponding to the received directional key based on the neighboring button information comprises: storing the neighboring button information of the highlighted button in a temporary memory; when there is button information corresponding to the received directional key stored in the temporary memory, storing the neighboring button information of the corresponding button in the temporary memory; when the corresponding button is activated on the screen, highlighting the corresponding button; and if the corresponding button is deactivated on the screen, finding the button information corresponding to the received directional key among the neighboring button information of the corresponding button stored in the temporary memory.

According to another aspect of the present invention, there is provided an apparatus for highlighting buttons on a screen on which a plurality of applications are displayed so as to interactively provide a user with audio/visual data, the apparatus comprising: a button controlling unit operable to generate neighboring button information for highlight movement within an application to which a highlighted button belongs or highlight movement to a neighboring application which is adjacent to the application to which the highlighted button belongs, and if a directional key input for highlight movement is received, highlighting a button corresponding to the received directional key based on the neighboring button information.

Additional aspects and/or advantages of the invention will be set forth in part in the description which follows and, in part, will be obvious from the description, or may be learned by practice of the invention.

All of the features described herein may be combined with any of the above aspects, in any combination.

For a better understanding of the invention, and to show how embodiments of the same may be carried into effect, reference will now be made, by way of example, to the accompanying diagrammatic drawings in which:
FIG. 1A is a drawing of a screen on which only one application is displayed according to a conventional technique;
FIG. 1B illustrates button information of 'APPLICATION #1' in the state illustrated in FIG. 1A;
FIG. 1C illustrates an example of a remote control used to select a button of 'APPLICATION #1' illustrated in FIG. 1A;
FIG. 2A is a drawing of a screen on which two applications are displayed according to the conventional technique;
FIG. 2B is a table of neighboring button information of 'APPLICATION #1' in the state illustrated in FIG. 2A;
FIG. 2C is a table of neighboring button information of 'APPLICATION #2' in the state illustrated in FIG. 2A;
FIG. 3A is a drawing of a screen on which two applications are overlapped and displayed according to the conventional technique;
FIG. 3B is a table of neighboring button information of 'APPLICATION #1' in the state illustrated in FIG. 3A;
FIG. 3C is a table of neighboring button information of 'APPLICATION #2' in the state illustrated in FIG. 3A;
FIG. 4 illustrates neighboring button information of an application making smooth movement among buttons defined in a plurality of applications, according to an aspect of the present invention;
FIG. 5A is a drawing of a screen on which three applications are displayed according to an embodiment of the present invention;
FIG. 5B is a table of neighboring button information of 'APPLICATION #1' in the state illustrated in FIG. 5A;
FIG. 5C is a table of neighboring button information of 'APPLICATION #2' in the state illustrated in FIG. 5A;
FIG. 5D is a table of neighboring button information of 'APPLICATION #3' in the state illustrated in FIG. 5A;
FIG. 6A is a drawing showing the state where two applications are displayed on a screen, according to the present invention and 'BUTTON 2' of 'APPLICATION #1' is not displayed;
FIG. 6B is a table of neighboring button information of 'APPLICATION #1' in the state illustrated in FIG. 6A;
FIG. 6C is a table of neighboring button information of 'APPLICATION #2' in the state illustrated in FIG. 6A;
FIG. 7 is a schematic diagram of an apparatus for reproducing an information storage medium according to an embodiment of the present invention;
FIG. 8 is a flowchart illustrating a method of highlighting buttons on a screen on which a plurality of applications are displayed according to an embodiment of the present invention; and
FIG. 9 is a flowchart of a process of the method illustrated in FIG. 8.

Reference will now be made in detail to the shown embodiments of the present invention, examples of which are illustrated in the accompanying drawings, wherein like reference numerals refer to the like elements throughout. The embodiments are described below in order to explain the present invention by referring to the figures.

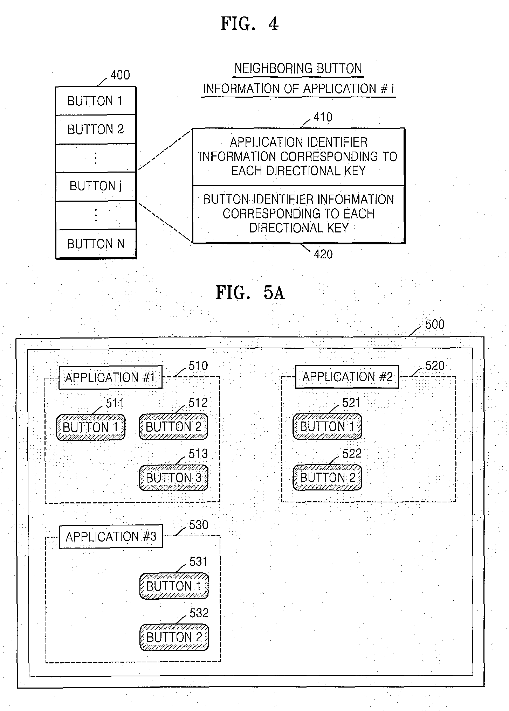

FIG. 4 illustrates neighboring button information of an application for smooth movement among buttons defined in a plurality of applications, according to an embodiment of the present invention. Previously, when defining neighboring button information, a manufacturer does not define the neighboring button information according to movement among buttons defined within an application, but defines neighboring button information of a specific button based on all buttons of all applications that can be displayed at the same time.

Referring to FIG. 4, button neighboring information 400 of 'APPLICATION #1' is one of a plurality of applications that can be displayed on one screen 500 at the same time.

The button information 400 includes neighboring button information about 'BUTTON 1', 'BUTTON 2', ... , 'BUTTON j', ... , and 'BUTTON N'. The neighboring button information 400 for each button includes application identifier information 410 and button identifier information 420. While not required in all aspects, the applications can be games, software related to controlling the AV data being reproduced, communication applications for use with the AV data being reproduced, applications related to providing educational content, and/or or applications used to provide interactive contents.

Unlike in the prior art in which only button identifier information is included in neighboring button information 130, 150 such as shown in FIGs. 2B, 2C, 3A and 3B, in the shown embodiment, application identifier information 410 is added to the button neighboring information 400 to further define neighboring button information. Thus, a button to be moved to is identified and an application to which the button to be moved to belongs is further identified. Therefore, even when multiple applications are being simultaneously executed, it is possible to create smooth button movement among the applications.

While not required in all aspects of the invention, the neighboring button information 400 may be included in each application or recorded independently of each application according to an aspect of the invention. Additionally, it is understood that it is possible to locally record in the apparatus neighboring button information.

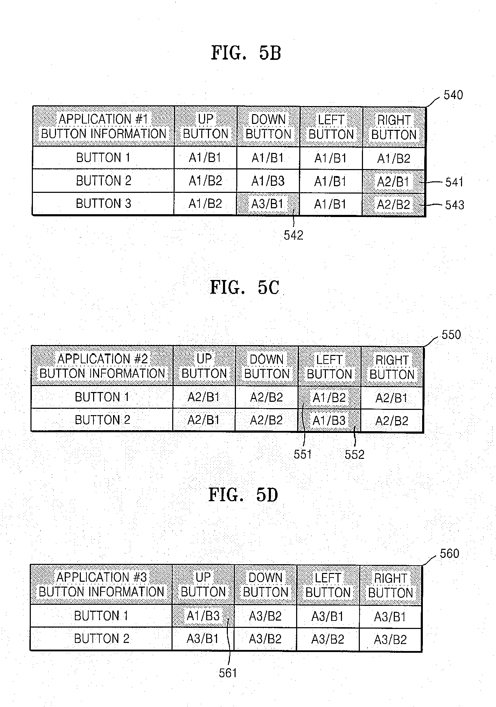

FIG. 5A is a drawing a screen 500 on which three applications are displayed according to an embodiment of the present invention. FIG. 5A illustrates an example in which 'APPLICATION #1' 510, 'APPLICATION #2' 520, and 'APPLICATION #3' 530 operate with AV data on the screen 500 of an apparatus for reproducing an information storage medium. Three buttons, 'BUTTON 1' 511, 'BUTTON 2' 512, and 'BUTTON 3' 513 are defined in 'APPLICATION #1' 510. Two buttons, 'BUTTON 1' 521 and 'BUTTON 2' 522 are defined in 'APPLICATION #2' 520. Two buttons, 'BUTTON 1' 531 and 'BUTTON 2' 532 are defined in 'APPLICATION #3' 530. While described in terms of being used with AV data, it is understood that the applications can be used with non AV data.

FIG. 5B is a table of neighboring button information 540 of 'APPLICATION #1' 510 in the state illustrated in FIG. 5A. The rows of the table of the neighboring button information 540 of 'APPLICATION #1' 510 respectively represent 'BUTTON 1' 511, 'BUTTON 2' 512, and 'BUTTON 3' 513. The columns of the table of the neighboring button information 540 of 'APPLICATION #1' 510 represent directional keys of a user input device pressed by the user. "An" of "An/Bn" represents application identification information, and "Bn" of "An/Bn" represents button identification information. Further, while shown as having four directions (i.e., UP/Down, Left/Right), it is understood that fewer or more directions can be used, and the directions do not have to be opposing pairs. Additionally, while described in terms of neighboring buttons, it is understood that the neighboring button information can refer to other applications which are not immediately adjacent, such as may occur when an unrelated application is between the present application and another application which is to be highlighted according to the table.

Referring to FIG. 5B, a first row of the table of the neighboring button information 540 represents information about a neighboring button which is highlighted when the user presses an up key, a down key, a left key, and a right key, respectively, using a user input device in the state where 'BUTTON 1' 511 of 'APPLICATION #1' 510 is selected. In the state where 'BUTTON 1' 511 is selected, when the up key is pressed, " 'BUTTON 1' 511 of 'APPLICATION #1' 510" is highlighted; when the down key is pressed, " 'BUTTON 1' 511 of 'APPLICATION #1' 510" is highlighted; when the left key is pressed, " 'BUTTON 1' 511 of 'APPLICATION #1' 510" is highlighted; and when the right key is pressed, " 'BUTTON 2' 512 of 'APPLICATION #1' 510" is highlighted.

A second row of the table of the neighboring button information 540 represents information about a neighboring button which is highlighted when the user presses the up key, the down key, the left key, and the right key, respectively, using the user input device in the state where 'BUTTON 2' 512 of 'APPLICATION #1' 510 is selected. In the state where 'BUTTON 2' 512 is selected, when the up key is pressed, " 'BUTTON 2' 512 of 'APPLICATION #1' 510" is highlighted; when the down key is pressed, " 'BUTTON 3' 513 of 'APPLICATION #1' 510" is highlighted; when the left key is pressed, " 'BUTTON 1' 511 of 'APPLICATION #1' 510" is highlighted; and when the right key is pressed, 'BUTTON 1' 511 of 'APPLICATION #2' 520" is highlighted.

A third row of the table of the neighboring button information 540 represents information about a neighboring button which is highlighted when the user presses the up key, the down key, the left key, and the right key, respectively, using the user input device in the state where 'BUTTON 3' 513 of 'APPLICATION #1' 510 is selected. In the state where 'BUTTON 3' 513 is selected, when the up key is pressed, " 'BUTTON 2' 512 of 'APPLICATION #1' 510" is highlighted; when the down key is pressed, " 'BUTTON 1' 511 of 'APPLICATION #3' 530" is highlighted; when the left key is pressed, " 'BUTTON 1' 511 of 'APPLICATION #1' 510" is highlighted; and when the right key is pressed, " 'BUTTON 2' 512 of 'APPLICATION #2' 520" is highlighted.

In contrast, in the prior art, when the user presses the right button of a remote control to move to 'BUTTON 1' 521 of 'APPLICATION #2' 520, which is an intuitive action when 'BUTTON 2' 512 of 'APPLICATION #1' 510 is selected in the screen illustrated in FIG. 5A, since button movement information among applications is not defined, highlighting is not moved in a desired direction such that the highlighting is maintained on 'BUTTON 2' 512 of 'APPLICATION #1' 510.

However, according to the shown embodiment, since the neighboring button information includes the application identifier information and button identifier information, when the user presses the right key of the remote control in the state where 'BUTTON 2' 512 of 'APPLICATION #1' 510 is selected, the user refers to a cell 541 of the table of the neighboring button information 540 and 'BUTTON 1' 521 of 'APPLICATION #2' 520 is highlighted, as the user wishes. Similarly, when the down key is pressed in the state where 'BUTTON 3' 513 is selected, 'BUTTON 1' 531 of 'APPLICATION #3' 530 is highlighted (cell 542). Further, when the right button is pressed in the state where 'BUTTON 3' 513 of 'APPLICATION #1' 510 is selected, 'BUTTON 2' 522 of 'APPLICATION #2' 520 is highlighted (cell 543).

FIG. 5C is a table of neighboring button information of 'APPLICATION #2' 520 in the state illustrated in FIG. 5A. Referring to FIG. 5C, a first row of the table of neighboring button information 550 represents information about a neighboring button which is highlighted when the user presses an up key, a down key, a left key, and a right key, respectively, using a user input device in the state where 'BUTTON 1' 521 of 'APPLICATION #2' 520 is selected. In the state where 'BUTTON 1' 521 is selected, when the up key is pressed, " 'BUTTON 1' 511 of 'APPLICATION #2' 520" is highlighted; when the down key is pressed, " 'BUTTON 2' 512 of 'APPLICATION #2' 520" is highlighted; when the left key is pressed, " 'BUTTON 2' 512 of 'APPLICATION #1' 510" is highlighted; and when the right key is pressed, " 'BUTTON 1' 511 of 'APPLICATION #2' 520" is highlighted.

A second row of the table of the neighboring button information 550 represents information about a neighboring button which is highlighted when the user presses the up key, the down key, the left key, and the right key, respectively, using the user input device in the state where 'BUTTON 2' 522 of 'APPLICATION #2' 520 is selected. In the state where 'BUTTON 2' 522 is selected, when the up key is pressed, " 'BUTTON 1' 511 of 'APPLICATION #2' 520" is highlighted; when the down key is pressed, " 'BUTTON 2' 512 of 'APPLICATION #2' 520" is highlighted; when the left key is pressed, " 'BUTTON 3' 513 of 'APPLICATION #1' 510" is highlighted; and when the right key is pressed, " 'BUTTON 2' 512 of 'APPLICATION #2' 520" is highlighted.

Referring to the neighboring button information 550, when the left button is pressed in the state where 'BUTTON 1' 521 of 'APPLICATION #2' 520 is selected, 'BUTTON 2' 512 of 'APPLICATION #1' 510 is selected (cell 551), and when the left button is pressed in the state where 'BUTTON 2' 522 of 'APPLICATION #2' 520 is selected, 'BUTTON 3' 513 of 'APPLICATION #1' 510 is highlighted (cell 552).

FIG. 5D is a table of neighboring button information of 'APPLICATION #3 'in the state illustrated in FIG. 5A. Referring to FIG. 5D, a first row of the table of the neighboring button information 560 represents information about a neighboring button which is highlighted when the user presses an up key, a down key, a left key, and a right key, respectively, using a user input device in the state where 'BUTTON 1' 531 of 'APPLICATION #3' 530 is selected. In the state where 'BUTTON 1' 531 is selected, when the up key is pressed, " 'BUTTON 3' 513 of 'APPLICATION #1' 510" is highlighted; when the down key is pressed, " 'BUTTON 2' 512 of 'APPLICATION #2' 530" is highlighted; when the left key is pressed, " 'BUTTON 1' 511 of 'APPLICATION #3' 530" is highlighted; and when the right key is pressed, " 'BUTTON 1' 511 of 'APPLICATION #3' 530" is highlighted.

A second row of the table of the neighboring button information 560 represents information about a neighboring button which is highlighted when the user presses the up key, the down key, the left key, and the right key, respectively, using the user input device in the state where 'BUTTON 2' 532 of 'APPLICATION #3' 530 is selected. In the state where 'BUTTON 2' 532 is selected, when the up key is pressed, " 'BUTTON 1' 511 of 'APPLICATION #3' 530" is highlighted; when the down key is pressed, " 'BUTTON 2' 512 of 'APPLICATION #3' 530" is highlighted; when the left key is pressed, " 'BUTTON 2' 512 of 'APPLICATION #3' 530" is highlighted; and when the right key is pressed, 'BUTTON 2' 512 of 'APPLICATION #3' 530" is highlighted. Referring to the neighboring button information 560, when the up key is pressed in the state where 'BUTTON 1' 531 of 'APPLICATION #3' 530 is selected, 'BUTTON 3' 513 of 'APPLICATION #1' 510 is highlighted (cell 561).

The neighboring button information 540, 550, 560 according to the shown embodiment is prepared based on all buttons included in all applications that can be displayed at the same time, and each of the applications. However, it is understood that a button indicated by the neighboring button information may not be activated and may not be displayed (i.e., be hidden) on the screen 500 in other aspects of the invention. In this embodiment, when it is determined that a button corresponding to the received directional key is in an activated state, the target button is highlighted. When a button corresponding to the received directional key is in a nonactivated state, the button corresponding to the received directional key is searched from neighboring button information of the target button, and when the button searched from neighboring button information of the target button is in an activated state, the searched button is highlighted. Additionally, it is understood that, while shown as allowing movement in a two dimensional arrangement of applications as shown in FIG. 5A, the movement can be also directed in a three dimensional arrangement of applications, such as where the applications are in areas that overlap.

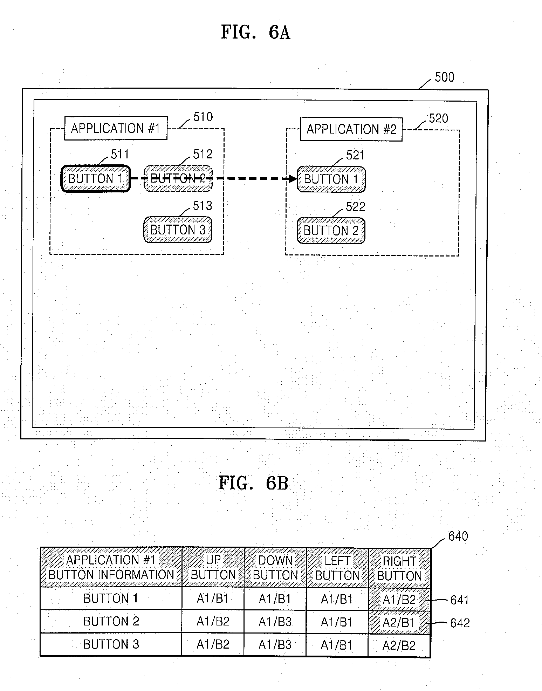

An example of a method of highlighting buttons in consideration of such a situation will now be described with reference to FIGS. 6A through 6C. FIG. 6A is a drawing of the screen 500 in the state where two applications are displayed according to and embodiment of the present invention, and 'BUTTON 2' 512 of the 'APPLICATION #1' 510 is not displayed. In the shown example, 'APPLICATION #1' 510 and 'APPLICATION # 2' 520 operate with AV data on the screen 500 of the apparatus for reproducing the information storage medium. Three buttons, 'BUTTON 1' 511, 'BUTTON 2' 512, and 'BUTTON 3' 513, are defined in 'APPLICATION #1' 510. Two buttons, 'BUTTON 1' 521 and 'BUTTON 2' 522, are defined in 'APPLICATION #2' 520. However, only 'BUTTON 1' 511 and 'BUTTON 3' 513 of 'APPLICATION #1' 510 are displayed on the screen 500, with 'BUTTON 2' 512 remaining hidden. The perimeter of 'BUTTON 2' 512 of 'APPLICATION #1' 510 is indicated in FIG. 6A as a dotted line, which indicates that 'BUTTON 2' 512 is deactivated and is not displayed on the screen 600. In 'APPLICATION #2' 520, 'BUTTON 1' 521 and 'BUTTON 2' 522 are both displayed on the screen 500.

FIG. 6B is a table of neighboring button information 640 of 'APPLICATION #1' in the state illustrated in FIG. 6A. Referring to FIG. 6B, a first row of the table of the neighboring button information 640 represents information about a neighboring button which is highlighted when the user presses an up key, a down key, a left key, and a right key, respectively, using a user input device in the state where 'BUTTON 1' 511 of 'APPLICATION #1' 510 is selected. In the state where 'BUTTON 1' 511 is selected, when the up key is pressed, 'A1/B1' is highlighted; when the down key is pressed, 'A1/B1' is highlighted; when the left key is pressed, 'A1/B1' is highlighted; and when the right key is pressed, 'A1/B2' is highlighted.

A second row of the table of the neighboring button information 640 represents information about a neighboring button which is highlighted when the user presses the up key, the down key, the left key, and the right key, respectively, using the user input device in the state where 'BUTTON 2' 512 of 'APPLICATION #1' 510 is selected. In the state where 'BUTTON 2' 512 of is selected, when the up key is pressed, 'A1/B2' is highlighted; when the down key is pressed, 'A1/B3' is highlighted; when the left key is pressed, 'A1/B1' is highlighted; and when the right key is pressed, 'A2/B1' is highlighted.
A third row of the table of the neighboring button information 640 represents information about a neighboring button which is highlighted when the user presses the up key, the down key, the left key, and the right key, respectively, using the user input device in the state where 'BUTTON 3' 513 of 'APPLICATION #1' 510 is selected. In the state where 'BUTTON 3' 513 is selected, when the up key is pressed, 'A1/B2' is highlighted; when the down key is pressed, 'A1/B3' is highlighted; when the left key is pressed, 'A1/B1' is highlighted; and when the right key is pressed, 'A3/B2' is highlighted.

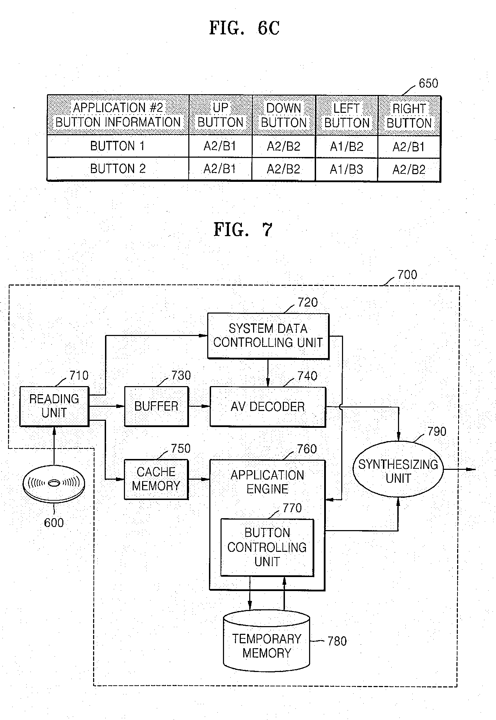

FIG. 6C is a table of neighboring button information 650 of 'APPLICATION #2' in the state illustrated in FIG. 6A.

Referring to FIG. 6C, a first row of the table of neighboring button information 650 represents information about a neighboring button which is highlighted when the user presses an up key, a down key, a left key, and a right key, respectively, using a user input device in the state where 'BUTTON 1' 521 of 'APPLICATION #2' 520 is selected. In the state where 'BUTTON 1' 521 of 'APPLICATION #2' 520 is selected, when the up key is pressed, 'A2/B1' is highlighted; when the down key is pressed, 'A2/B2' is highlighted; when the left key is pressed, 'A1/B2' is highlighted; and when the right key is pressed, 'A2/B1' is highlighted.

A second row of the table of the neighboring button information 650 represents information about a neighboring button which is highlighted when the user presses the up key, the down key, the left key, and the right key, respectively, using the user input device in the state where 'BUTTON 2' 522 of 'APPLICATION #2' 520 is selected. In the state where 'BUTTON 2' 522 is selected, when the up key is pressed, 'A2/B1' is highlighted; when the down key is pressed, 'A2/B2' is highlighted; when the left key is pressed, 'A1/B3' is highlighted; and when the right key is pressed, 'A2/B2' is highlighted.

An embodiment of a method of processing button movement when a button which is to be highlighted according to neighboring button information is deactivated will now be described. Referring to FIGs. 6A and 7, 'BUTTON 1' 511 of 'APPLICATION # 1' 510 is currently highlighted. When the right key is pressed by a user, a button controller within an application engine stores neighboring button information for 'BUTTON 1' 511 of 'APPLICATION #1' 510, which is presently selected, in a temporary memory 780. Then, an application identifier #1 and a button identifier 'BUTTON 2' corresponding to 'A1/B2' (cell 641) in the table of neighboring button information 640 are extracted, and neighboring button information of the target button (i.e., 'BUTTON 2' 512 of 'APPLICATION #1' 510) is written in the temporary memory 780. While not restricted thereto, the temporary memory 780 can be RAM, flash memory, a cache memory such as the cache 750, a buffer such as the buffer 730, or combinations thereof.

After being written, a screen output state of 'BUTTON 2' 512 of 'APPLICATION #1' 510 is checked. Since 'BUTTON 2' 512 of 'APPLICATION #1' is not displayed on the screen 500, the application identifier #2 and the button identifier 'BUTTON 1' corresponding to 'A2/B1' (cell 642) in the table of neighboring button information 640 are extracted, corresponding to the situation when 'BUTTON 2' 512 of 'APPLICATION #1' 510 is selected and the right key is pressed by the user. Simultaneously, the button neighboring information of the target button (that is, 'BUTTON 1' 521 of 'APPLICATION #2' 520) is written in the temporary memory 780. The output state of the target button is checked, and 'BUTTON 1' 521 of 'APPLICATION #2' 520 is highlighted since 'BUTTON 1' 521 is displayed. According to an embodiment of the method, even when a deactivated button exists in operating applications, smooth button movement can be performed between buttons belonging to a plurality of applications. However, it is understood that, in other embodiments, the hidden button 'BUTTON 2' 512 of 'APPLICATION #1' 510 could be activated instead of skipped over as shown in FIG. 6A, such as when the 'BUTTON 2' 512 of 'APPLICATION #1' 510 relates to hidden functions of 'APPLICATION #1' 510.

FIG. 7 is a schematic diagram of an apparatus 700 for reproducing an information storage medium 600 according to an embodiment of the present invention. Referring to FIG. 7, the apparatus 700 includes a reading unit 710, a system data controlling unit 720, a buffer 730, an AV decoder 740, a cache memory 750, an application engine 760, a button controlling unit 770, a temporary memory 780, and a synthesizing unit 790. While described in terms of reproducing, it is understood that the apparatus 700 can further perform recording. Additionally, it is understood that ones of these elements can be combined in other embodiments of the invention.

The reading unit 710 reads AV data, navigation data for controlling reproduction of the AV data, and application data providing interactive applications for a user from the information storage medium 660. The system data controlling unit 720 processes system data for managing the cache memory 750 and a reproduction order of the AV data and applications. The buffer 730 buffers AV data received from the reading unit 710, and the AV decoder 740 decodes the buffered AV data. Since the buffer 730 functions to ensure the proper operating speed of the AV decoder 740 and the reading unit 710, the AV data provided from the reading unit 710 can be immediately transmitted to the AV decoder 740 if the operating speed of the reading unit 710 matches the operating speed of the AV decoder 740. As such, in another embodiment, the buffer 730 need not be used or need not be used for the AV data.

The cache memory 750 stores the read application data in advance of being activated according to an aspect of the invention. The application engine 760 controls the apparatus 700 to read out necessary data for applications from the cache memory 750, to interpret the resources and to display the resources on an output device (such as a display). The application engine 760 includes the button controlling unit 770 for controlling button movement among a plurality of applications. In the example shown in FIG. 7, the button controlling unit 770 is included within the application engine 760. However, the button controlling unit 770 can be arranged independently of the application engine 760 in other aspects of the invention.

The temporary memory 780 stores neighboring button information of the button selected in the application engine 760. The synthesizing unit 790 synthesizes the AV data decoded by the AV decoder 740 and the application data interpreted by the application engine 760 and to be displayed on the output device, and outputs the synthesized result to the output device.

An example of the operation of the apparatus 700 illustrated in FIG. 7 will now be described. When the system data controlling unit 720 determines a title to be reproduced when starting reproduction of the information storage medium 600, the reading unit 710 reads a stream of the title to be reproduced from the information storage medium 600, transmits the stream to the AV decoder 740 through the buffer 730, reads an application to be executed, and stores the application in the cache memory 750.

The AV decoder 740 decodes the received stream. The application engine 760 performs the application designated by the system data controlling unit 720 and stores data to be used by the application (that is, an image, sound or an application code) in the cache memory 750. The button controlling unit 770 of the application engine 760 constitutes an apparatus for selecting buttons to be highlighted on a screen (not shown) on which a plurality of applications are displayed, so as to interactively provide the user with audio/visual data. While described generally as buttons, it is understood that the buttons can be any displayed input element, such as a button, a switch, a dial, and/or a slide control and other indicia displayed on a screen and through which a user selects the specific functions of the application(s). Additionally, each input element corresponds to a predetermined function or command to be used to control the corresponding application. Examples of the predetermined functions include, but are not limited to, volume controls, stop and start comments, send commands, alphanumeric number entry, and other like commands.

The button controlling unit 770 generates neighboring button information for highlight movement within an application to which the highlighted button belongs or highlight movement to a neighboring application which is adjacent to the application to which the highlighted button belongs. The button controlling unit 770 stores the neighboring button information of a target button in the temporary memory 780. When the button controlling unit 770 receives a directional key input for highlight movement, the button control unit 770 highlights the button corresponding to the received directional key based on the neighboring button information as described above.

While not required in all aspects, the button controlling unit 770 can generate the neighboring button information based on all applications that can be executed with the audio/visual data and button information of the applications when producing the neighboring button information.

Moreover, while not required in all aspects, the button controlling unit 770 can generate the neighboring button information based on the applications that are being currently being displayed on the present screen and the button information of the applications. That is, the neighboring button information can comprise a plurality of information tables, and the neighboring button information table can be selectively used according to the applications which are being executed at a given time. For example, when first and third applications are being executed, an information table in which neighboring button information about the first and third applications is included is used, and when a second application is executed, an information table in which neighboring button information about the second application is included can be used.

Also, while not required in all aspects, the button controlling unit 770 can dynamically change the button neighboring information according to a display mode of the applications that are being executed on a screen. For example, when the first application is being output at the top of the screen and the second application is being output at the bottom of the screen, a first neighboring button information table can be used. When the first application is being output at the bottom of the screen and the second application is being output at the top of the screen, a second neighboring button information table can be used. To this end, the neighboring button information table used by the button controlling unit 770 can be changed according to the applications being executed and the locations where the applications are displayed on the screen according to aspects of the invention.

Further, while not required in all aspects, the button controlling unit 770 can record the neighboring button information by including the neighboring button information in each application or independently of the application. As such and while not limited thereto, the neighboring button information can be pre-recorded on the storage medium 600 and/or can be stored on the apparatus 700.

According to an aspect of the invention, when the button corresponding to the received directional key is deactivated on the screen, the button controlling unit 770 highlights the button corresponding to the received directional key based on the neighboring button information of the button corresponding to the received directional key. Specifically, the button controlling unit 770 stores the neighboring button information of the highlighted button in the temporary memory 780. Then, in response to the received directional key, the button controlling unit 770 stores the neighboring button information of the target button corresponding to the received directional key in the temporary memory 780. When the target button is activated on the screen, the button controlling unit 770 highlights the target button. When the target button is deactivated on the screen, the button controlling unit 770 searches the neighboring button information of the deactivated button corresponding to the received directional key stored in the temporary memory 780 to determine which button is to be highlighted.

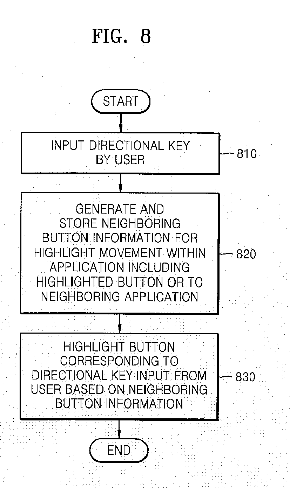

FIG. 8 is a flowchart illustrating a method of highlighting buttons on a screen on which a plurality of applications are displayed according to an embodiment of the present invention. In operation 810, a directional key input by a user is received. In operation 820, neighboring button information for movement within the application including the highlighted button or to a neighboring application is generated and stored. The neighboring button information can be composed based on information about all applications that can be reproduced with reproduced AV data or information about applications which are being executed at a given time. In operation 830, the button corresponding to the directional key input from the user based on the neighboring button information is highlighted.

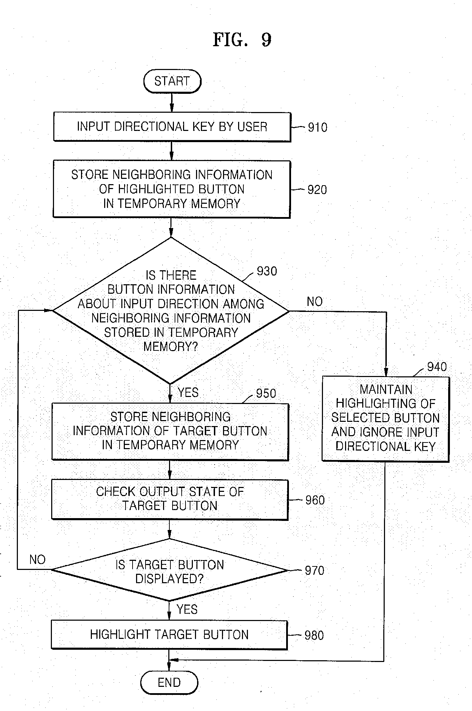

FIG. 9 is a flowchart of an embodiment of a process of the method illustrated in FIG. 8 in which a button indicated for highlighting is deactivated. In operation 910, in a state where a button of a specific application is highlighted, a directional key input by a user is received. In operation 920, the button controlling unit 770 in the application engine 760 stores the neighboring button information of the highlighted button in the temporary memory 780. In operation 930, it is determined whether there exists neighboring button information corresponding to a direction of a directional key pressed by the user. If the neighboring button information does not exist, in operation 940, highlighting of the selected button is maintained while ignoring the input directional key.

If the neighboring button information of the corresponding direction exists, in operation 950, application identifier and button identifier information are extracted and the neighboring button information of the extracted button is written in the temporary memory 780. In operation 960, it is determined whether the target button is displayed on the present screen. That is, in operation 970, it is determined whether the corresponding application is operating using the application identifier, and if the application is being executed, it is determined whether the target button is activated using the button identifier.

In operation 980, if the target button is displayed on the screen, the target button is highlighted. If the target button is not displayed on the screen, the button controlling unit 770 checks the neighboring button information of the hidden button corresponding to the direction input by the user from the neighboring button information stored in the temporary memory 780 in operation 930, and highlights another button corresponding to the directional key input by the user among buttons displayed on the screen.

While not required in all aspects, embodiments of the invention can also be embodied as computer readable code on a one or more computer readable recording medium to be executed on one or more computers and/or processors. The computer readable recording medium is any data storage device that can store data which can be thereafter read by a computer system. Examples of the computer readable recording medium include, but are not limited to, read-only memory (ROM), random-access memory (RAM), CD-ROMs, magnetic tapes, floppy disks, optical data storage devices, flash memory, and/or carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains. Lastly, while described in terms of being displayed with audio/video data, aspects of the invention can be implemented for a synthesized display with other types of data, and can be used without being included in a combined display.

As described above, in the method and apparatus for highlighting buttons on a screen on which a plurality of applications are displayed and the information storage medium thereof according to embodiments of the present invention, by adding the application identifier to the neighboring button information and changing a button movement process, highlighting movement among buttons defined in a plurality of applications can be made without confusing a user when the applications are executed on one screen.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information storage medium for use by an apparatus and which is operable to store interactive contents and audio/visual data, wherein the contents include:
applications that are selectively executable by the apparatus in addition to the audio/visual data; and
information about a button operable to perform a predetermined function to be performed by the apparatus with respect to one of the applications being displayed, and which includes neighboring button information (400) for highlighting movement within the application to which a highlighted button belongs and highlighting movement to another application which is displayed adjacent to the application to which the highlighted button belongs.

2. The information storage medium of claim 1, wherein the neighboring button information (400) includes, for the highlighted button, application identifier information (410) and button identifier information (420) for a next button to be highlighted organized according to potential inputs of directional keys while the highlighted button is selected.

3. The information storage medium of claim 1 or claim 2, wherein the neighboring button information (400) is composed based on all of the applications that can be executed with the audio/visual data and button information of the applications

4. The information storage medium of claim 1 or claim 2, wherein the neighboring button information (400) is composed based on different groups of applications being executed at a given time and button information of the applications.

5. The information storage medium of any preceding claim, wherein the neighboring button information (400) is included in applications and/or recorded independently of the applications.

6. A method of highlighting buttons on a screen (500) on which a plurality of applications (510,520,530) are displayable so as to interactively provide a user with audio/visual data, the method comprising:
generating neighboring button information (540,550,560) for highlight movement selectable between highlight movement within an application (510,520,530) to which a highlighted button belongs and highlight movement to a neighboring application (510,520,530) which is displayed adjacent to the application (510,520,530) to which the highlighted button belongs; and
when a directional key input for highlight movement is received, highlighting a button corresponding to the received directional key input based on the neighboring button information (540).

7. The method of claim 6, wherein the generating of the neighboring button information (540) includes generating application identifier information (410) and button identifier information (420) for the highlighted button for a next button to be highlighted organized according to potential inputs of directional keys while the highlighted button is selected.

8. The method of claim 6 or claim 7, wherein the generating of the neighboring button information (540) comprises generating the neighboring button information (540) based on applications that can be executed with the audio/visual data and button information of the applications.

9. The method of any one of claims 6 to 8, wherein the generating of the neighboring button information (540) comprises generating the neighboring button information (540) based on applications that are currently being executed on the screen (500) and button information of the applications.

10. The method of claim 8 or claim 9, wherein the generating of the neighboring button information (540) comprises dynamically changing the neighboring button information (540) according to a display state of the applications that are being executed on the screen (500).

11. The method of any one of claims 6 to 10, wherein the neighboring button information (540) is included in applications and/or recorded independently of the applications.

12. The method of any one of claims 6 to 11, wherein the highlighting of the button comprises, when the button corresponding to the received directional key is deactivated on the screen (500), highlighting another button corresponding to the received directional key based on neighboring button information (540) of the deactivated button which corresponds to the received directional key.

13. The method of claim 12, wherein the highlighting of the button further comprises:
storing the neighboring button information (540) of the highlighted button in a temporary memory (780);
when there is button information corresponding to the received directional key stored in the temporary memory (780), storing the neighboring button information (540) of the corresponding button in the temporary memory (780);
when the corresponding button is activated on the screen (500), highlighting the corresponding button according to the stored neighboring button information (540) and the received directional key input; and
when the corresponding button is deactivated on the screen (500), finding the neighboring button information (540) corresponding to the received directional key among the neighboring button information (540) of the corresponding deactivated button and which is stored in the temporary memory (780).

14. An apparatus for highlighting buttons on a screen (500) on which a plurality of applications (510,520,530) are displayable so as to interactively provide a user with audio/visual data, the apparatus comprising:
a button controlling unit (770) for generating neighboring button information (540) for individually indicating and selecting between highlight movement within an application (510,520,530) to which a highlighted button belongs and highlight movement to a neighboring application (510,520,530) which is adjacent to the application (510,520,530) to which the highlighted button belongs, and when a directional key input for highlight movement is received, highlighting a button corresponding to the received directional key based on the neighboring button information (540).

15. The apparatus of claim 14, wherein the neighboring button information (540) includes, for the highlighted button, application identifier information (410) and button identifier information (420) for a next button to be highlighted organized according to inputs of directional keys while the highlighted button is selected.

16. The apparatus of claim 14 or claim 15, wherein the button controlling unit (770) is operable to generate the neighboring button information (540) based on applications (510,520,530) that can be executed with the audio/visual data and button information of the applications (510,520,530).

17. The apparatus of claim 16, wherein the button controlling unit (770) is operable to dynamically change the neighboring button information (540) according to a display state of the applications (510,520,530) that are being executed on the screen (500).

18. The apparatus of any one of claims 14 to 15, wherein the button controlling unit (770) is operable to generate the neighboring button information (540) based on applications (510,520,530) that are being presently executed on the screen (500) and button information of the applications (510,520,530).

19. The apparatus of any one of claims 14 to 18, wherein the button controlling unit (770) is operable to record the neighboring button information (540) by including the neighboring button information (540) in applications (510,520,530) or independently of the applications (510,520,530).

20. The apparatus of any one of claims 14 to 19, wherein, if the button corresponding to the received directional key is deactivated on the screen (500), the button controlling unit (770) is operable to highlight the button corresponding to the received directional key based on neighboring button information (540) of the deactivated button corresponding to the received directional key.

21. The apparatus of claim 20, wherein the button controlling unit (770):
is operable to store the neighboring button information (540) of the highlighted button in a temporary memory (780),
to store the neighboring button information (540) of the corresponding button in the temporary memory (780) when the neighboring button information (540) corresponding to the received directional key is stored in the temporary memory (780),
when the corresponding button is activated on the screen (500), to highlight the corresponding button, and
when the corresponding button is deactivated on the screen (500), to find the neighboring button information (540) corresponding to the received directional key among the neighboring button information (540) of the corresponding deactivated button stored in the temporary memory (780).

22. The method of claim 9, wherein the generating of the neighboring button information (540) comprises dynamically changing the neighboring button information (540) according to a display state of the applications (510,520,530) that are being executed on the screen (500).

23. The apparatus of claim 17, wherein the button controlling unit (770) is operable to dynamically change the neighboring button information (540) according to a display state of the applications (510,520,530) that are being executed on the screen (500).

24. An information storage medium for use by an apparatus to provide interactive contents, the storage medium comprising:
applications (510,520,530) that are selectively executable by the apparatus, each of the applications (510,520,530) having a corresponding set of input elements which are displayed and through which commands are input to the application to perform specific functions; and
input element highlight information about each set of input elements and which comprises, for each element, an indication of a next input element to be highlighted and to which application (510,520,530) the next input element belongs selectable between a present application (510,520,530) and another application (510,520,530) to which the set does not correspond, wherein the apparatus (510,520,530) displays the input elements for use in accessing the functions of the executed applications (510,520,530) and highlights the next input element according to the indication.

25. The information storage medium of claim 24, wherein, for one of the input elements, the input element highlight information includes, for each of a plurality of potential directional inputs to a next input element, a corresponding pair of next element information indicating the next input element and application information selectable between the present and the another application.

26. The information storage medium of claim 25, wherein, for a first one of the directional inputs of the one input element, the application information indicates to the apparatus that the next element is of the another application.

27. The information storage medium of claim 26, wherein, for a second one of the directional inputs of the one input element, the application information indicates to the apparatus that the next element is of the present application.

28. The information storage medium of any one of claims 24 to 27, further comprising:
audio/visual data to be reproduced by the apparatus while providing the interactive contents, wherein the applications (510,520,530) are selectively executable by the apparatus to be executed with the audio/visual data being reproduced.

29. The information storage medium of any one of claims 24 to 28, wherein:
the input element information corresponding to each input element for the first and second applications (510,520,530) comprises a table organized by highlighted input element and movement directions,
each cell of the table includes a next input element to be highlighted and an application indicator which indicates and selects between the first and second application, and
the apparatus is operable to distinguish to which of the first and second applications the next input element belongs according to the application indicator.

30. The information storage medium of claim 29, further comprising:
audio/visual data to be reproduced by the apparatus while providing the interactive contents, wherein the applications (510,520,530) are selectively executable by the apparatus to be executed with the audio/visual data being reproduced.

31. A computer readable medium encoded with processing instructions for implementing a method of highlighting buttons on a screen (500) on which a plurality of applications (510,520,530) are displayed executed by one or more computers, the method comprising:
generating input element information selectable between highlighting movement within a set of input elements for an application to which a highlighted input element belongs and highlighting movement within another set of input elements for another application which is displayed with the application to which the highlighted input element belongs; and
when a directional key input for highlight movement is received, highlighting an input element corresponding to the received directional key input based on the input element information.

32. The computer readable medium of claim 31, wherein, for one of the input elements, the input element highlight information includes, for each of a plurality of potential directional inputs to a next input element, a corresponding pair of next element information indicating the next input element and application information selectable between the present and the another application.

33. The computer readable medium of claim 32, further comprising receiving a first one of the directional inputs of the one input element, determining from the application information that the next input element is of the another application, and highlighting the next input element of the another application.

34. The computer readable medium of claim 32, further comprising receiving a second one of the directional inputs of the one input element, determining from the application information that the next input element is of the present application, and highlighting the next input element of the present application.

35. The computer readable medium of any one of claims 31 to 34, wherein:
the input element information corresponding to each input element for the first and second applications (510,520,530) comprises a table organized by highlighted input element and movement directions of the directional key input, and
each cell of the table includes a next input element to be highlighted and an application indicator which indicates and selects between the first and second application.

36. An apparatus for highlighting buttons on a screen (500) on which first and second applications (510,520) are displayed, the apparatus comprising:
a memory for storing input element information indicating, for each displayed input element, a next input element to be highlighted and to which of the first and second applications (510,520) the next input element belongs; and
a controlling unit which is operable to receive an input to move in a direction relative to a currently highlighted input element in a first application (510), to retrieve from the memory the input element information corresponding to the highlight input element and the direction, to detect from the retrieved input element information the next input element and that the next input element is in the second application (520), and to highlight on the display the detected next input element in the second application (520) as detected from the input element information.

37. The apparatus of claim 36, wherein the controlling unit is further operable to detect the first and second applications (510,520) being displayed, to generate the input element information corresponding to each input element displayed for the first and second applications (510,520) and which includes an application indicator which, for each of a plurality of potential next input elements selectable from a highlighted input element, is operable to indicate and select between the first and second application (510,520).

38. The apparatus of claim 36 or claim 37, wherein the controlling unit is operable to store the input element information corresponding to each input element for the first and second applications (510,520) as a table organized by highlighted input element and movement directions, wherein each cell of the table includes a next input element to be highlighted and an application indicator which indicates and selects between the first and second application (510,520).

39. The apparatus of claim 38, further comprising:
an audio and/or video reproducing unit which is operable to reproduce audio and/or video data;
an application engine which is operable to execute the applications, display the input elements, and allow navigation between the input elements on the screen (500); and
a synthesizing unit which is operable to combine the reproduced audio and/or video data to be displayed on the screen (500) with the displayed input elements being navigated.
